# EUROPEAN PATENT APPLICATION

(11) **EP 1 725 034 A2**
(43) Date of publication of application: **22.11.2006**
(21) Application number: 06114187.5
(22) Date of filing: 18.05.2006
(51) Int. Cl.: H04N 7/10

(54) **UWB transmission system**

(30) Priority: 19.05.2005 KR 2005042084
(71) Applicant: Samsung Electronics Co., Ltd., Yeongtong-gu Suwon-city, Gyeonggi-do 442-742 (KR)
(72) Inventor: Kim, Hyun-chin 814 Samsung Chereville Apt.,, Gyeonggi-do (KR); Park, Keun-joo A-317 Dormitory of Samsung, Yongin-shi Gyeonggi-do (KR); Seo, Young-kwang, Seoul (KR); Yeo, Yeong-bae, Daegu Metropolitan-City (KR)
(74) Representative: Walaski, Jan Filip

(57) **Abstract**

A wireline ultra wideband (UWB) signal transmission device, and a wireline ultra wideband signal transmission method of transmitting an ultra wideband signal over a pipeline carrying a cable television (CATV) broadcasting signal. The pipeline includes a plurality of coaxial cables operatively connected through a plurality of splitters that divide the CATV broadcasting signal at a predetermined rate. A plurality of wireline UWB signal transmission devices respectively connected to the pipeline transmit a wireline single band orthogonal frequency division multiplexing (SB-OFDM) based UWB signal through the pipeline and recover a multimedia signal from the SB-OFDM based signal.

## Description

The present invention relates to a system for and a method of transmitting an ultra wideband signal over a pipeline provided in a home in order to receive a cable television (CATV) signal. More specifically, the present invention relates to a wireline ultra wideband signal transmission system and a wireline ultra wideband signal transmission method in which home networking can be implemented by transmitting a single-band ultra wideband (UWB) signal over a pipeline including a coaxial cable and a splitter and carrying a CATV broadcasting signal.

As interest in home networking increases and home networking technology develops, various technologies for implementing wireline/wireless home networking in a home have been proposed.

For example, U.S. published application No. 2005-0034159 discloses a method of interfacing between a wireline network based on a coaxial cable and a wireless network based on a wireless local area network (LAN), which is the Institute of Electrical and Electronics (IEEE) 802.11 standard, to implement a home video network.

In order to connect the wireless LAN, according to the IEEE 802.11 standard, to the coaxial cable in the home environment, a switch is provided between an access point and an antenna, which are transmission devices for the wireless LAN, and a splitter of the coaxial cable. Through a simple operation of the switch, a wireless LAN signal is wirelessly transmitted to the antenna or the wireless LAN signal is directly transmitted to the coaxial cable. In such a conventional technology, since narrow-band and high-output signals within a frequency band of 2.4 GHz are used, the transmission through the coaxial cable is possible and a maximum transmission speed of 54 mega-bits per second (Mbps) is provided.

As such, in the conventional technology, the wireless LAN signal is transmitted to the coaxial cable without any conversion. However, the conventional technology cannot be directly applied to a case of a UWB signal under discussion in IEEE 802.15.3a.

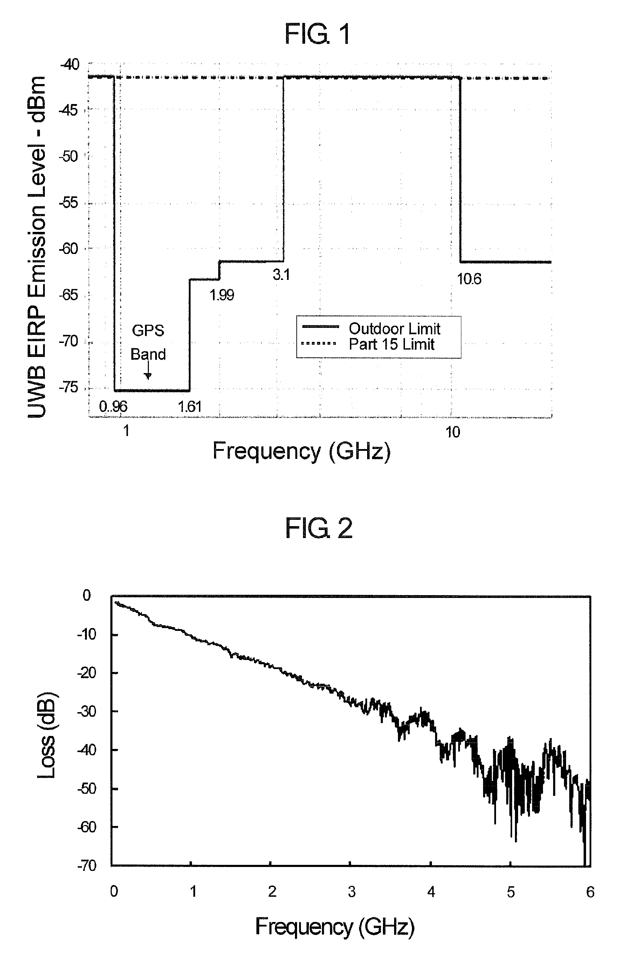

For example, a transmission speed of 100 Mbps or more is required to transmit a plurality of high-definition moving pictures in real time. In this case, even though the UWB technology can be used, the wireless UWB signal cannot be directly transmitted to the coaxial cable and reasons therefor will be explained with reference to graphs shown in Figures 1 to 3.

Figure 1 is a graph illustrating an example of a power spectrum of a wireless UWB signal defined by the Federal Communications Commission (FCC), and the spectrum in a band of 3 to 10 GHz is defined as a transmission frequency band of the wireless UWB signal. Figure 1 shows allowable levels of Equivalent Isotropically Radiated Power (EIRP) for one type of service. Figure 2 is a graph illustrating a characteristic of transmission attenuation of a coaxial cable as a frequency response. Referring to Figure 2, a transmission loss of 30 dB or more occurs in a coaxial cable having a length of 10 m in a frequency band of 3 to 10 GHz, the frequency band of the wireless UWB signal. Assuming that a range of the transmission loss with respect to the wireless UWB signal is 60 dB, it is difficult to transmit the wireless UWB signal by using a coaxial cable having a length of 20 m.

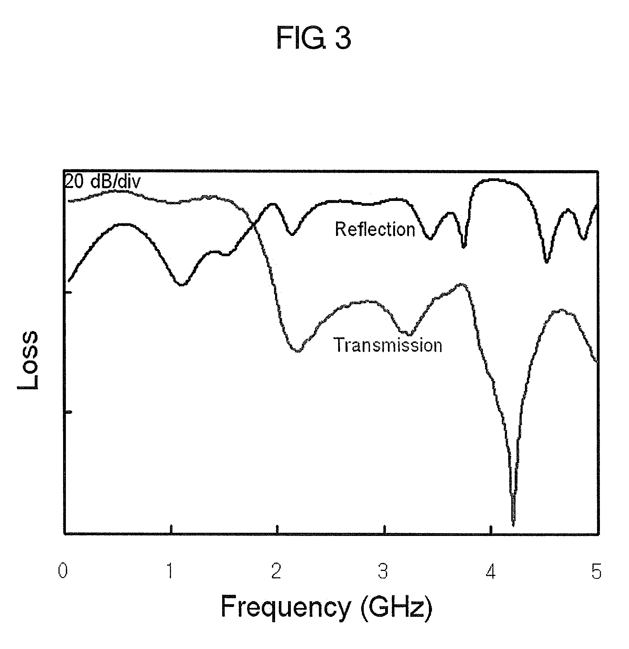

Figure 3 illustrates a transmission characteristic of an RF splitter. In the frequency band of 3 to 10 GHz of the wireless UWB signal, a loss due to the transmission characteristic of the splitter is larger than a loss due to a reflection characteristic. Accordingly, it can be seen that it is difficult to transmit the wireless UWB signal through the RF splitter.

A UWB signal based on a wireless multi-band (MB) orthogonal frequency division multiplexing (OFDM) method under discussion in IEEE 802.15.3a is evaluated to be excellent in a transmission capability in an environment where multi-path interference frequently occurs, for example, in a CATV pipeline, as compared with other analog and digital transmission methods.

For home networking among wireline/wireless multimedia electronic apparatuses in a home, an even more effective method of applying the UWB signal transmission technology based on interfacing the wireless MB-OFDM method to the wireline CATV pipeline has been requested.

An aspect of the present invention provides a method of transmitting a wireline single-band orthogonal-frequency-division-multiplexing-based UWB signal to a pipeline carrying a CATV broadcasting signal provided in a home, the pipeline including a coaxial cable and a splitter, to implement home networking with a high data transmission speed among different rooms in the home.

According to an aspect of the present invention, a wireline ultra wideband (UWB) signal transmission system includes: a plurality of coaxial cables that are provided in a home to transmit a CATV broadcasting signal; a plurality of splitters respectively connected to the coaxial cables to divide the CATV broadcasting signal at a predetermined rate; and a plurality of wireline UWB signal transmission devices respectively connected to terminals of a pipeline carrying the CATV broadcasting signal to transmit a wireline UWB signal, the pipeline including the plurality of coaxial cables and the plurality of splitters.

In the wireline ultra wideband signal transmission system, each of the wireline UWB signal transmission devices may include: a wireline/wireless interface module connected to a plurality of wireline/wireless multimedia electronic apparatuses, such as a digital television (DTV), a camcorder, a digital camera, a personal video recorder (PVR), a set top box (STB), a hard disk, a speaker, or a personal computer (PC), which are located in different rooms in a home, so that wireline/wireless multimedia signals transmitted in a signal format, such as IEEE1394, universal serial bus (USB), or Ethernet can be transmitted therebetween; a CATV/wireline UWB signal coupling/separation module connected to the pipeline carrying the CATV broadcasting signal to couple/separate the wireline UWB signal with/from the CATV broadcasting signal; a wireline UWB signal transmission/reception module connected to one port of the CATV/wireline UWB signal coupling/separation module to transmit/receive the wireline UWB signal in a predetermined frequency band; a signal conversion module located between the wireline UWB signal transmission/reception module and the wireline/wireless interface module to perform a conversion between the wireline UWB signal and the wireline/wireless multimedia signal; and a control module that controls operations of the wireline/wireless interface module, the CATV/wireline UWB signal coupling/separation module, the wireline UWB signal transmission/reception module, and the signal conversion module.

According to another aspect of the present invention, a wireline ultra wideband signal transmission method includes: transmitting a wireline/wireless multimedia signal from a wireline/wireless multimedia electronic apparatus; converting the wireline/wireless multimedia signal to a wireline UWB signal; and transmitting/receiving the wireline UWB signal in a predetermined frequency band. Additional aspects and/or advantages of the invention will be set forth in part in the description which follows and, in part, will be obvious from the description, or may be learned by practice of the invention.

These and/or other aspects and advantages of the invention will become apparent and more readily appreciated from the following description of the embodiments, taken in conjunction with the accompanying drawings of which:
Figure 1 is a graph illustrating frequency spectrum of a UWB signal;
Figure 2 is a graph illustrating a characteristic of transmission attenuation of a coaxial cable as a frequency response;
Figure 3 is a graph illustrating a transmission characteristic of an RF splitter;
Figure 4 is a view illustrating a configuration of a wireline ultra wideband signal transmission system according to an embodiment of the present invention;
Figure 5A illustrates a frequency band used by a CATV signal;
Figure 5B illustrates a frequency band used by a direct sequence (DS) UWB signal;
Figure 5C illustrates a frequency bands used by a multi band (MB) OFDM signal; and
Figure 5D comparatively illustrates a coaxial cable loss in bands used by a CATV signal and a single band OFDM signal;
Figure 6 is a block diagram illustrating a configuration of a wireline UWB signal transmission device according to an embodiment of the present invention;
Figure 7 is a block diagram illustrating a configuration of a wireline single-band orthogonal-frequency-division-multiplexing-based UWB signal transmission/reception module according to an embodiment of the present invention;
Figure 8 is a view illustrating a configuration of a wireline UWB signal transmission system according to another embodiment of the present invention; and
Figures 9A and 9B are graphs illustrating a frequency characteristic of a separation module in the wireline UWB signal transmission system shown in Figure 8.

Reference will now be made in detail to the present embodiments of the present invention, examples of which are illustrated in the accompanying drawings, wherein like reference numerals refer to the like elements throughout. The embodiments are described below in order to explain the present invention by referring to the figures. Embodiments of present invention are described herein with reference to flowchart illustrations of user interfaces, methods, and computer program products. It will be understood that each block of the flowchart illustrations, and combinations of blocks in the flowchart illustrations, may be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, implement functions specified in the flowchart block or blocks.

The computer program instructions may be stored in a computer usable or computer-readable memory that can direct a computer or other programmable data processing apparatus to function in a particular manner, such that the instructions stored in the computer usable or computer-readable memory produce an article of manufacture implementing the function specified in the flowchart block or blocks.

The computer program instructions may be loaded onto a computer or other programmable data processing apparatus to cause a series of operations to be performed on the computer or other programmable apparatus to produce a computer implemented process such that the instructions that execute on the computer or other programmable apparatus implement the functions specified in the flowchart block or blocks.

Each block of the flowchart may represent a module, segment, or portion of code, which comprises one or more executable instructions implementing the specified logical function or functions. In some alternative implementations, the functions noted in the blocks may occur in an order other than the order illustrated. For example, two blocks shown in succession may in fact be executed substantially concurrently or the blocks may be executed in reverse order, depending upon the functionality involved.

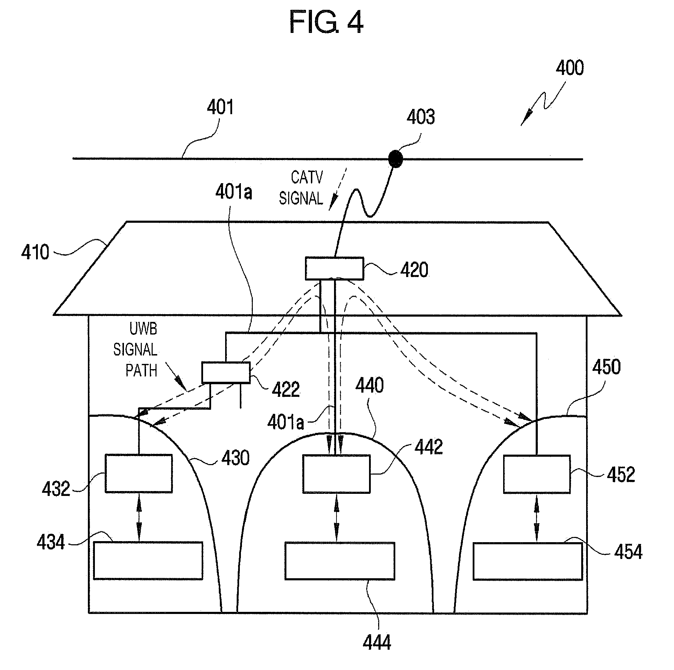

Figure 4 is a view illustrating a configuration of a wireline ultra wideband (UWB) signal transmission system 400 according to an embodiment of the present invention. The wireline ultra wideband signal transmission system 400 includes: a coaxial cable 401 a provided in each room in a home to transmit a cable television (CATV) broadcasting signal received through a tap 403 connected to a coaxial cable 401; splitters 420 and 422 each of which is connected to the coaxial cable 401a to divide the CATV broadcasting signal at a predetermined rate; and a plurality of wireline UWB signal transmission devices 432, 442, and 452 each of which is connected to a pipeline carrying the CATV signal and transmits a wireline UWB signal, the pipeline including the plurality of coaxial cables and the plurality of splitters.

An operation of the wireline ultra wideband signal transmission system 400 will be explained using an example.

The example assumes that a user desires to reproduce a movie stored in a wireline/wireless hard disk 444 located in a living room 440 and then watch the movie in a wireline/wireless high-definition television 434 located in a bedroom 430.

In this case, data stored in the wireline/wireless hard disk 444 is transmitted as a high-speed wireline/wireless multimedia signal to the second wireline UWB signal transmission device 442. The wireline/wireless multimedia signal may be transmitted in a signal format, such as IEEE1394, universal serial bus (USB), or Ethernet.

The wireline/wireless multimedia signal is converted to a wireline single-band orthogonal-frequency-division-multiplexing-based (SB- OFDM)UWB signal, and the converted signal is transmitted through the splitters 420 and 422 in order and through the coaxial cable 401 a to be then transmitted to the first wireline UWB signal transmission device 432. The converted wireline single-band orthogonal-frequency-division-multiplexing-based UWB signal is transmitted through the coaxial cable 401 a using a frequency band which is not used for the CATV signal transmission. The first wireline UWB signal transmission device 432 reversely converts the transmitted SB-OFDM UWB signal into the wireline/wireless multimedia signal format, such as IEEE1394, USB, or Ethernet, and then transmits the converted wireline/wireless multimedia signal to the wireline/wireless high-definition television 434, and thus the user can watch the movie. The wireline UWB signal transmission device 452 located in another room 450 may communicate with another device 454, such as for example, a PC.

The CATV broadcasting signal transmitted through the coaxial cable 401 reaches the first wireline UWB signal transmission device 432 through the tap 403 and the splitters 420 and 422, and the first wireline UWB signal transmission device 432 transmits the CATV broadcasting signal to a separate set-top box (not shown) for CATV broadcasting signal reception.

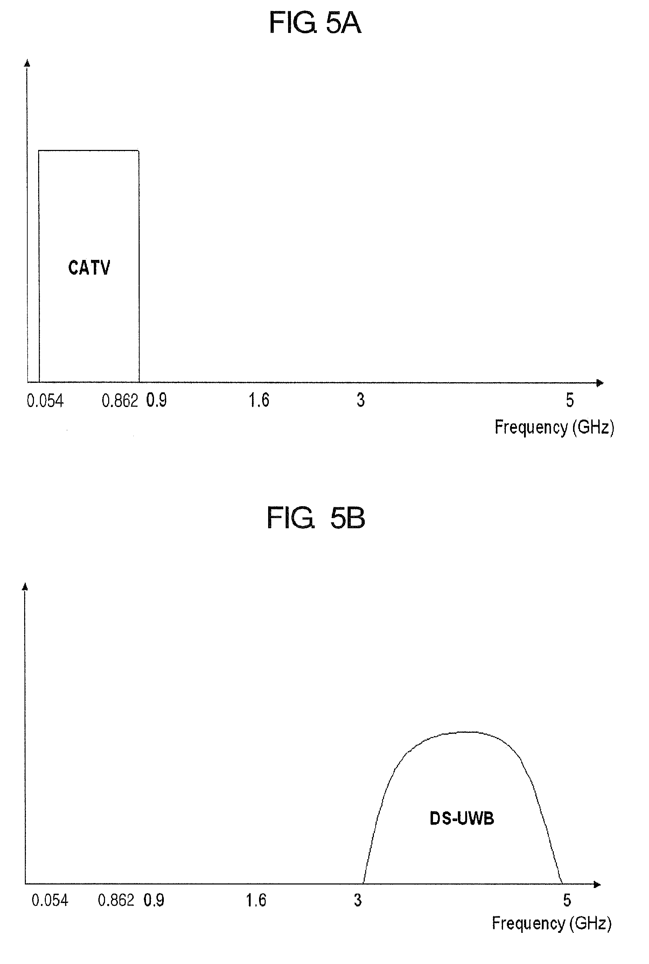

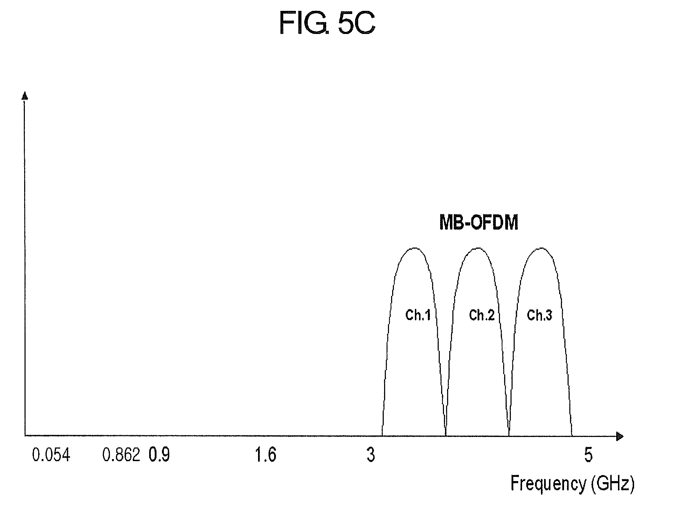

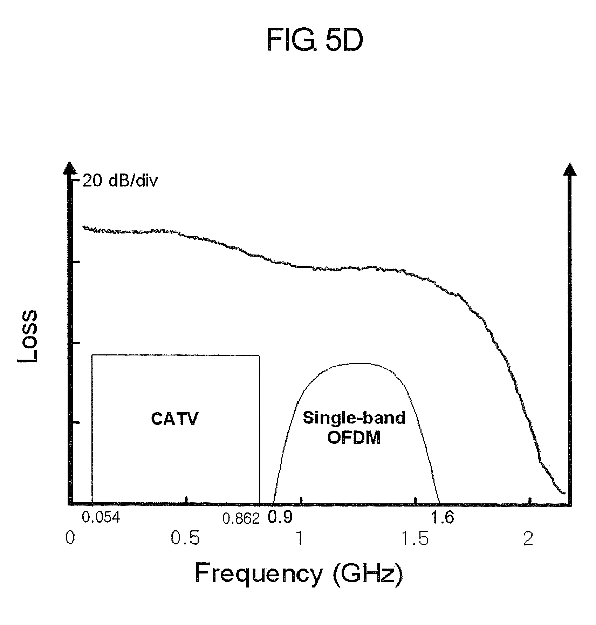

Figure 5A illustrates a frequency band used by a CATV signal; Figure 5B illustrates a frequency band used by a direct sequence (DS) UWB signal; Figure 5C illustrates frequency bands used by a MB-OFDM signal; and Figure 5D comparatively illustrates a coaxial cable loss in bands used by a CATV signal and a single band OFDM signal.

The CATV signal is transmitted in a frequency band of about 54 MHz to 862 MHz, as shown in Figure 5A. On the other hand, a wireless DS-UWB signal is transmitted in a frequency band of about 3 GHz to 5 GHz, as shown in Figure 5B, and a wireless MB-OFDM signal is transmitted using a plurality of channels existing within a frequency band of about 3 GHz to 5 GHz as shown in Figure 5C, using a frequency hopping method. In the case of the wireless DS-UWB signal, since a wide frequency band of several gigahertz is used, the wireless DS-UWB signal is not suitable for the coaxial cable environment. Therefore, in the embodiment of the present invention, a new wireless OFDM UWB signal transmission method will be applied to the pipeline carrying the CATV signal.

The frequency spectrum according to the embodiment of the present invention is shown in Figure 5D. A frequency band, corresponding to a bandwidth of one channel of a wireless MB-OFDM signal, may be assigned for transmitting the wireline UWB signal through the coaxial cable, for example, a frequency band of about 0.9 GHz to about 1.6 GHz. Unlike the wireless UWB signal, dynamic frequency hopping should not be performed for a wireline UWB signal, thus the frequency band is referred to as 'Single-band OFDM' in Figure 5D.

In the case of the wireless MB-OFDM transmission method, since a frequency band of about 1.5 GHz is used, the wireless MB-OFDM transmission method cannot be directly applied to the coaxial cable environment in the same manner as the case of the DS-UWB signal. Accordingly, in order to apply the UWB signal transmission technology to the pipeline carrying a CATV signal, the wireline UWB signal is transmitted to the pipeline carrying a CATV signal by using only a single frequency band corresponding to one channel without performing the dynamic frequency hopping.

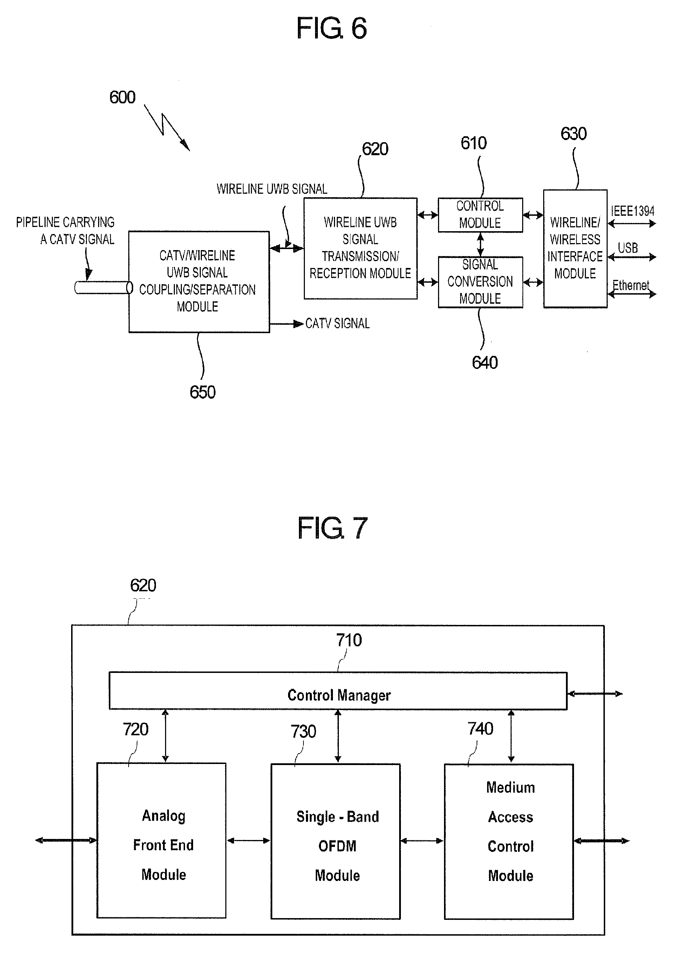

Figure 6 is a block diagram illustrating a configuration of a wireline UWB signal transmission device 600 according to an embodiment of the present invention. The wireline UWB signal transmission device includes: a wireline/wireless interface module 630 connected to a plurality of wireline/wireless multimedia electronic apparatuses, such as a DTV, a camcorder, a digital camera, a PVR, an STB, a hard disk, a speaker, or a PC, which are located in a home, so that wireline/wireless multimedia signals transmitted in a signal format, such as IEEE1394, USB, or Ethernet can be transmitted therebetween; a CATV/wireline UWB signal coupling/separation module 650 connected to the pipeline carrying a CATV signal to couple/separate the wireline UWB signal with/from the CATV broadcasting signal; a wireline UWB signal transmission/reception module 620 connected to one port of the CATV/wireline UWB signal coupling/separation module 650 to transmit/receive the wireline single-band orthogonal-frequency-division-multiplexing-based UWB signal; a signal conversion module 640 located between the wireline UWB signal transmission/reception module 620 and the wireline/wireless interface module to perform a conversion between the wireline UWB signal and the wireline/wireless multimedia signal; and a control module 610 controlling operations of the wireline UWB signal transmission/reception module 620, the wireline/wireless interface module 630, and the signal conversion module 640.

The term 'module', as used herein, refers to, but is not limited to, a software or hardware component, such as a Field Programmable Gate Array (FPGA) or Application Specific Integrated Circuit (ASIC), which performs certain tasks. A module may advantageously be configured to reside on the addressable storage medium and configured to execute on one or more processors. Thus, a module may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The functionality provided for in the components and modules may be combined into fewer components and modules or further separated into additional components and modules.

The wireline UWB signal transmission/reception module 620 included in the wireline UWB signal transmission device 600 shown in Figure 6 will be described in detail with reference to Figure 7.

The UWB signal transmission/reception module 620 shown in Figure 7 includes: a medium access control module 740 performing a signal connection control to transmit a signal, which is transmitted from the signal conversion module 640 shown in Figure 6, to each of the wireline UWB signal transmission devices 432, 442, and 452 each of which is connected to the pipeline carrying the CATV signal, as shown in Figure 4; a single-band OFDM module 730 connected to the medium access control module 740 and generating a single-band orthogonal-frequency-division-multiplexing-based signal; an analog front end module 720 up-converting the single-band OFDM based signal to a signal within a frequency band in which the SB-OFDM based signal can be transmitted through the pipeline carrying the CATV signal; and a control manager 710 controlling operations of the medium access control module 740, the single-band OFDM module 730, and the analog front end module 720.

The analog front end module 720 up-converts the transmitted SB-OFDM based UWB signal to a signal within a frequency band in which the transmitted SB-OFDM based UWB signal can be transmitted through the pipeline carrying the CATV signal, for example, a signal within a frequency band of 0.9 GHz to 1.6 GHz.

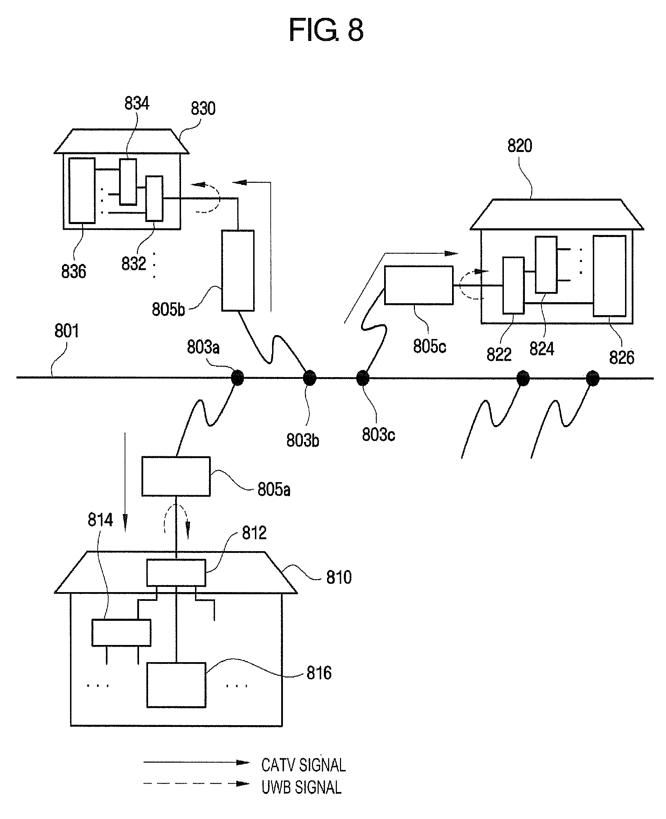

Figure 8 is a view illustrating a configuration of a wireline UWB signal transmission system according to another embodiment of the present invention. Homes 810, 820, and 830 are respectively provided with splitters 812 and 814, 822 and 824, and 832 and 834 and wireline UWB signal transmission devices 816, 826, and 836 according to the embodiment of the present invention. A CATV signal is transmitted to each of the homes 810, 820, and 830 through taps 803a, 803c, and 803b, respectively, connected to a coaxial cable 801.

The wireline UWB signal transmission system shown in Figure 8 and the wireline UWB signal transmission system shown in Figure 4 are different from each other in that separation modules 805a, 805b, and 805c are respectively interposed between the taps 803a, 803b, and 803c and the splitters 812, 822, and 832.

Each of the separation modules 805a, 805b, and 805c serves to prevent a UWB signal belonging to one home from being transmitted to an external network by reflecting a down-converted UWB signal. Therefore, each of the separation modules 805a, 805b, and 805c has a filter characteristic in which the UWB signal is selectively transmitted or selectively reflected in accordance with an existing frequency band.

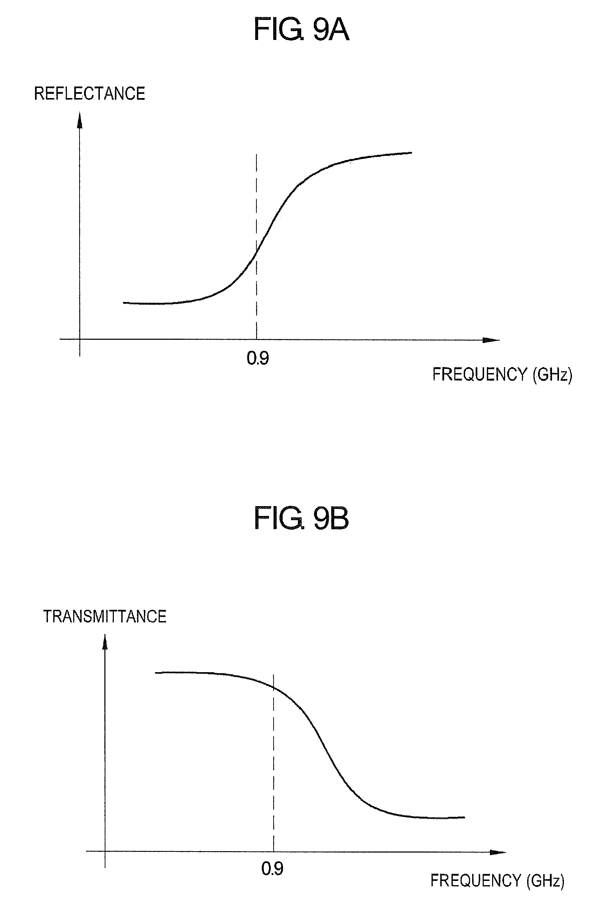

Figs. 9A and 9B are graphs illustrating frequency characteristics of the separation modules 805a, 805b, and 805c in the wireline UWB signal transmission system shown in Figure 8. For example, when a signal converted from a UWB signal exists in a frequency band equal to or larger than 0.8 GHz, each of the separation modules 805a, 805b, and 805c has a frequency characteristic in which, among signals transmitted from a home to an external network, a signal having a frequency equal to or larger than about 0.9 GHz is reflected as shown in Figure 9A and the signal having a frequency equal to or larger than about 0.9 GHz is not transmitted as shown in Figure 9B. Alternatively, the separation modules 805a, 805b, and 805c may make signals, which are to be transmitted to the external network, corresponding to every frequency reflected. In addition, the separation modules 805a, 805b, and 805c may serve to improve the signal-to-noise ratio of a signal transmitted between different rooms in a home by increasing the intensity of a reflected UWB signal.

According to the present invention described above, in each of the rooms in a home, a user can watch the CATV through a pipeline carrying a CATV signal and at the same time, the home networking among wireline/wireless multimedia electronic apparatuses located at different rooms can be implemented.

Although a few embodiments of the present invention have been shown and described, it would be appreciated by those skilled in the art that changes may be made in these embodiments without departing from the scope of the invention as defined in the claims.

## Claims

1. A wireline ultra wideband UWB signal transmission system comprising:
a plurality of coaxial cables for transmitting a cable television CATV broadcasting signal throughout a building;
a plurality of splitters respectively connected to the coaxial cables for distributing the CATV broadcasting signal; and
a plurality of wireline UWB signal transmission devices respectively connected to the coaxial cables for transmitting a wireline UWB signal over the coaxial cables.

2. The wireline ultra wideband signal transmission system according to claim 1,
wherein each of the wireline UWB signal transmission devices comprises:
a wireline/wireless interface module connected to a plurality of wireline/wireless multimedia electronic apparatuses so that a wireline/wireless multimedia signal is transmittable therebetween;
a CATV/wireline UWB signal coupling/separation module connected to a pipeline carrying the CATV broadcasting signal and coupling/separating the wireline UWB signal with/from the CATV broadcasting signal;
a wireline UWB signal transmission/reception module connected to one port of the CATV/wireline UWB signal coupling/separation module and transmitting/receiving the wireline UWB signal;
a signal conversion module connected between the wireline UWB signal transmission/reception module and the wireline/wireless interface module and performing a conversion between the wireline UWB signal and the wireline/wireless multimedia signal; and
a control module controlling operations of the wireline/wireless interface module, the CATV/wireline UWB signal coupling/separation module, the wireline UWB signal transmission/reception module, and the signal conversion module.

3. The wireline ultra wideband signal transmission system according to claim 1 or 2, wherein each of the wireline UWB signal transmission devices transmits the wireline UWB signal to the pipeline carrying the CATV broadcasting signal in a format of a single-band orthogonal-frequency-division-multiplexing-based UWB signal.

4. The wireline ultra wideband signal transmission system according to claim 3,
wherein each of the wireline UWB signal transmission devices transmits/receives the wireline UWB signal in a predetermined frequency band.

5. The wireline ultra wideband signal transmission system according to claim 4,
wherein the predetermined frequency band includes a part of a frequency band of the pipeline which is not used by the CATV broadcasting signal.

6. The wireline ultra wideband signal transmission system according to claim 5,
wherein the predetermined frequency band includes frequencies greater than or equal to 900 MHz.

7. The wireline ultra wideband signal transmission system according to any one of claims 3 to 6, further comprising:
a separation module selectively transmitting the wireline UWB signal transmitted to the pipeline carrying the CATV broadcasting signal in accordance with a frequency band.

8. The wireline ultra wideband signal transmission system according to claim 7
wherein the separation module selectively reflects the wireline UWB signal in accordance with the frequency band.

9. A method of transmitting an ultra wideband signal transmission via a wireline, the method comprising:
transmitting a wireline/wireless multimedia signal from a wireline/wireless multimedia electronic apparatus;
converting the wireline/wireless multimedia signal to a wireline UWB signal; and
transmitting/receiving the wireline UWB signal in a predetermined frequency band.

10. The method according to claim 9,
wherein the wireline UWB signal is in a format of a single-band orthogonal-frequency-division-multiplexing OFDM based UWB signal.

11. The wireline ultra wideband signal transmission method according to claim 9 or 10, wherein the predetermined frequency band includes a part of a frequency band of a pipeline carrying a CATV broadcasting signal which is not used by the CATV broadcasting signal.

12. The wireline ultra wideband signal transmission method according to claim 11, wherein the predetermined frequency band includes frequencies greater than or equal to 900 MHz.

13. A network comprising:
a coaxial pipeline operatively adapted to transmit an RF signal;
a first interface module, connected between a first multimedia device and a first port of the pipeline, the first interface module converting a multimedia signal to a single band-orthogonal frequency division multiplexing (SB-OFDM) based ultra wideband (UWB) signal and transmitting the SB-OFDM based UWB signal through the coaxial pipeline, and
a second interface module connected between a second multimedia device and a second port of the pipeline, the second interface module reconverting the SB-OFDM based UWB signal to the multimedia signal and transmitting the reconverted multimedia signal to the second multimedia device.

14. The network of claim 13, further comprising:
a signal splitter for coupling a cable TV (CATV) signal into the coaxial pipeline.

15. The network of claim 14, wherein a frequency of the SB-OFDM based UWB signal is greater than a frequency band of the CATV signal.

16. The network of claim 15, further comprising:
a second signal splitter connecting a source of the CATV signal with the coaxial pipeline; and
an isolation module isolating the SB-OFDM based UWB signal from the source of the CATV signal.

17. The network of claim 16, wherein:
the isolation module transmits the CATV signal from the source to the pipeline, and rejects transmission of the SB-OFDM based UWB signal from the pipeline to the source of the CATV signal.

18. The network of any one of claims 13 to 17, wherein the multimedia signal is an IEEE 1394 signal, a USB signal or an Ethernet signal.

19. The network of any one of claims 13 to 18, wherein the first interface module and the second interface module are located in different rooms of a home.

20. The network of any one of claims 13 to 19, wherein the frequency of the SB-OFDM based UWB signal is in a band of about 0.9 GHz to about 1.6 GHz.

21. The network of any one of claims 13 to 20, wherein the SB-OFDM based UWB signal and the CATV signal are simultaneously transmitted through the coaxial pipeline.

22. A system for communicating between a first multimedia device and a second multimedia device through a network including a coaxial pipeline simultaneously carrying a cable TV (CATV) signal, the system comprising:
a signal transmission module for converting a multimedia signal output by the first multimedia device to a single band orthogonal frequency division multiplexing (SB-OFDM) based ultra wide band (UWB) signal; and
a coupling module for coupling the SB-OFDM based UWB signal into the coaxial pipeline carrying the CATV signal, to transmit the SB-OFDM based UWB signal to the second multimedia device.

23. The system of claim 22, wherein the SB-OFDM based UWB signal is included in a frequency band higher than a frequency band of the CATV signal.

24. A system according to claim 22 or 23, further comprising a signal reception module for converting the SB-OFDM based UWB signal to the multimedia signal output by the first multimedia device and for outputting the converted multimedia signal to the second multimedia device.
